Europäisches Patentamt

European Patent Office

Office européen des brevets

(19)

(11) Veröffentlichungsnummer: **0 000 917**
**A1**

(12) EUROPÄISCHE PATENTANMELDUNG

(21) Anmeldenummer: 78100668.9

(22) Anmeldetag: 16.08.78

(51) Int. Cl.²: **C 08 J 9/14**
**// C08L75/04**

(30) Priorität: 27.08.77 DE 2738719

(43) Veröffentlichungstag der Anmeldung: 07.03.79
Patentblatt 79/5

(84) Benannte Vertragsstaaten: **BE CH DE FR GB NL SE**

(71) Anmelder: Bayer Aktiengesellschaft, Zentralbereich
Patente,Marken und Lizenzen Bayerwerk, D-5090
Leverkusen 1 (DE)

(72) Erfinder: Mitschke, Karl-Heinz, Dr., Am Berg 22,
D-5068 Odenthal (DE)
Erfinder: Niederprüm, Hans, Dr., Hofstrasse 27, D-4019
Monheim (DE)
Erfinder: Kapps, Manfred, Dr., Hoppersheider Weg 55,
D-5060 Bergisch-Gladbach 2 (DE)

(54) Verwendung von 1,1,1,-Trifluor-2-chloräthan als Treibmittel für die Herstellung von geschäumten Kunststoffen.

(57) Die vorliegende Erfindung betrifft ein Verfahren zur Herstellung von geschäumten Kunststoffen durch Umsetzung von zu hochmolekularen Kunststoffen im Sinne einer Polymerisations-, Kondensations- oder Polyadditionsreaktion ausreagierender Ausgangsmaterialien in Gegenwart von Treibmitteln oder einem an sich bekannten Verschäumen eines nicht geschäumten, thermoplastischen Kunststoffs mit Hilfe eines Treibmittels, wobei man als Treibmittel 1,1,1-Trifluor-2-chloräthan, gegebenenfalls im Gemisch mit 1,1-Difluor-1,2-dichloräthan einsetzt. Das Verfahren eignet sich insbesondere zur Herstellung von Polyurethanschaumstoffen.

EP 0 000 917 A1

BEZEICHNUNG GEÄNDERT
siehe Titelseite

BAYER AKTIENGESELLSCHAFT       5090 Leverkusen, Bayerwerk
Zentralbereich                 Br/bc
Patente, Marken und Lizenzen

Verfahren zur Herstellung von geschäumten Kunststoffen

Die vorliegende Erfindung betrifft ein Verfahren zur Herstellung von geschäumten Kunststoffen, vorzugsweise auf Polyisocyanatbasis, insbesondere von Polyurethanschaumstoffen unter Verwendung von 1,1,1-Trifluor-2-chloräthan, gegebenenfalls im Gemisch mit 1,1-Difluor-1,2-dichloräthan.

Die Herstellung von geschäumten Kunststoffen, wie z.B. von Polyurethanen mit Hilfe von Treibmitteln auf der Basis von Fluorchlorkohlenwasserstoffen ist an sich bekannt (vgl. z.B. DT-PS 1 045 644).

Treibmittel auf Fluorchlorkohlenwasserstoffbasis, insbesondere Trichlorfluormethan (R11) sowie in geringerem Maße Dichlordifluormethan (R12) und 1,1,2-Trichlortrifluoräthan (R113), sind von großer technischer Bedeutung, da sie es beispielsweise gestatten, harte Polyurethanschäume mit 90 bis 95 % geschlossenen Zellen herzustellen. Hierbei verbleibt das in den Zellen eingeschlossene R 11 im wesentlichen darin und ergibt wegen der günstigen physikalischen Eigenschaften einen Schaumstoff mit sehr geringer Wärme-

Le A 18 383 - Ausland

leitfähigkeit (vgl. O. Scherer, Technische organische Fluorverbindungen, Fortschr.Chem.Forsch., Bd. 14/2, S. 147 (1968)). Solche harten Polyurethanschaumstoffe werden vor allem als Wärme-Kälte-Isolationsmittel bei Kühlmöbeln, Kühlräumen, Rohrleitungen, Behältern und Bauelementen, sowie als Verpackungsmaterial und als Oberflächenschutz eingesetzt. Insbesondere der Trend zu energiesparender Bauweise durch bessere Isolierung läßt dieses Gebiet weiter expandieren.

Die Verwendung von halogensubstituierten Alkanen, insbesondere R 11 und R 12, wurde erstmals in der DT-PS 1 045 644 beschrieben.

Als Treibgase geeignete Halogenalkane müssen bestimmte Eigenschaften besitzen wie geeigneter Siedepunkt bzw. Dampfdruck, Löslichkeit oder Dispergierbarkeit in einer der Reaktionskomponenten, zum Beispiel dem Polyester oder Polyäther, geringe Wärmeleitfähigkeit, toxikologische Unbedenklichkeit, chemische Inertheit, Unbrennbarkeit, geringe Diffusionsgeschwindigkeit, sowie Verhinderung des Schrumpfens des Schaumstoffs bzw. Vermeidung des Anquellens der Zellwände.

Neben weichen, halbharten und harten Schaumstoffen auf Polyisocanat-Basis wie insbesondere Polyurethanschaumstoffen werden mit Hilfe der genannten Fluorchloralkane auch Schaumstoffe auf Polyolefin-, Polystyrol- und Phenolharz-Basis hergestellt, wobei die verschiedensten Techniken zur Anwendung gelangen, z.B. Direktverschäumung, Vorverschäumung (Frothing-Methode), Direktbegasungsverfahren im Extruder (vgl. z.B. Firmenschrift "Kaltron, das Treibmittel für Schaumstoffe", Kali-Chemie AG, Hannover (1976)).

Le A 18 383

0000917

Da perhalogenierte Fluorchloralkane nur sehr schwer abbaubar sind (vgl. z.B. Nature 249, 810 (1974); Symposium-Bericht des Gottlieb Duttweiler Instituts, Rüschlikon/Zürich, 17./18.2.1977; Aerosol Report, Vol. 16, Nr. 1/1977, S. 12 und 13) besteht ein großes Bedürfnis nach alternativen Schaumtreibmitteln, die ähnlich gute Eigenschaften wie die perhalogenierten Fluorchloralkane besitzen, die aber leicht abbaubar und daher ökologisch unbedenklich sind.

Es wurde nun ein Verfahren zur Herstellung von geschäumten Kunststoffen, insbesondere von Polyurethanschaumstoffen gefunden, welches das genannte Bedürfnis in vollem Umfang befriedigt, bei welchem als Treibmittel 1,1,1-Trifluor-2-chloräthan, gegebenenfalls im Gemisch mit 1,1-Difluor-1,2-dichloräthan eingesetzt werden.

Gegenstand der vorliegenden Erfindung ist ein Verfahren zur Herstellung von geschäumten Kunststoffen durch Umsetzung von zu hochmolekularen Kunststoffen im Sinne einer Polymerisations-, Polykondensations- oder Polyadditionsreaktion ausreagierenden Ausgangsmaterialien in Gegenwart von Treibmitteln oder an sich bekanntes Verschäumen eines nicht-geschäumten, thermoplastischen Kunststoffs mit Hilfe eines Treibmittels, dadurch gekennzeichnet, daß man als Treibmittel 1,1,1-Trifluor-2-chloräthan, gegebenenfalls im Gemisch mit 1,1-Difluor-1,2-dichloräthan einsetzt.

Überraschend hat sich gezeigt, daß 1,1,1-Trifluor-2-chloräthan (R 133a), gegebenenfalls im Gemisch mit 1,1-Difluor-1,2-dichloräthan (R 132), sehr gut als Treibmittel für die Herstellung von geschäumten Kunststoffen, insbesondere für solche auf Polyurethanbasis, geeignet ist. Die Qualität der damit hergestellten Schaumstoffe entspricht im wesentlichen der herkömmlich z.B. mit $CFCl_3$ (R 11) hergestellten Produkte.

R 133a bzw. R 132 sind unbrennbar und nach allen bisherigen Untersuchungen physiologisch unbedenklich (vgl. z.B. Nachrichten Chemie und Technik 24, 1976, S. 307 und Aerosol Age, January 1977, S. 9). Beide Substanzen sind unter dem Ein-

**Le A 18 383**

fluß von Licht gut abbaubar. Die troposphärische Lebensdauer von 133a beträgt nur 6,1 Jahre (von Schweinichen, Aerosol Report, April 1977, S. 172-180). Hierbei ist noch zu berücksichtigen, daß R 133a nur ein Chloratom besitzt, das herkömmlich meist eingesetzte R 11 jedoch drei Chloratome. Wie eigene Versuche zeigten, zersetzen sich $CFCl_3$ bei 24-stündiger Bestrahlung (Osram-Ultra-Vitalux-Lampen) mit einem Strahlungsgemisch, das etwa dem natürlichen Sonnenlicht in mehreren tausend Meter Höhe entspricht, zu 0,04 % (aus den resultierenden Cl-Ionenmengen bestimmt) bzw. zu 0,13 % (aus resultierenden F-Ionenmengen bestimmt). Dagegen beträgt der Zersetzungsgrad für $CF_3CH_2Cl$ 53 % bzw. 46 %.

R 133a ist leicht und in hohen Ausbeuten sowie in ausgezeichneter Reinheit (größer 99,99 %) durch katalytische Flüssigphasenfluorierung von unstabilisiertem Trichloräthylen, einem billigen Massenprodukt, herstellbar, ebenso wie das Vorprodukt R 132 (DT-OS 2 719 021).

Schließlich ist bemerkenswert, daß R 133a trotz der troposphärischen Abbaubarkeit eine hohe thermische und chemische Stabilität besitzt, z.B. gegenüber hydrolytischen Einflüssen und nucleophilen Angriffen (beispielsweise von OH-Ionen oder Aminen). Eine speziell stabilisierte Qualität, wie sie bei der Anwendung von R 11 im Rahmen der Polyurethan-Verschäumung in den Fällen benötigt wird, wo vorgemischte Systeme von Polyolen, Katalysatoren auf Aminbasis, Silicon-Stabilisatoren und Treibmittel längere Zeit vor der eigentlichen Verschäumung lagern, ist bei der Verwendung von R 133a (bzw. R 132) nicht erforderlich (vgl. L.M. Zwolinski, Rubber Age, July 1975, S. 54). Auch Polyole auf Aminbasis sind mit Hilfe der neuen Treibmittel problemlos zu verarbeiten.

Le A 18 383

Überraschend ist darüber hinaus, daß R 133a trotz des im Vergleich zu R 11 wesentlich niedrigeren Siedepunktes von 6,9$^O$C (R 11 = 23,7$^O$C) gut als Treibmittel bei der Schaumkunststoffherstellung einsetzbar ist. Vermutlich ist hierfür die gute Löslichkeit in den Verschäumungskomponenten verantwortlich.

Der zusätzliche Einsatz von R 132 (Kp = 46,8$^O$C) ist in den Fällen zweckmäßig, wo höhere Verschäumungstemperaturen auftreten bzw. wo das Rohmaterial bei höheren Temperaturen lagert, so daß der Dampfdruck des Treibmittels zu hoch wird. Hier kann R 132 das üblicherweise in solchen Fällen eingesetzte R 113 = $CF_2Cl-CFCl_2$, Kp = 47,7$^O$C, substituieren, da R 113 als perhalogeniertes Alkan wie R 11 nur sehr schwer abbaubar ist.

Die Herstellung der Schaumstoffe erfolgt in an sich bekannter Weise (vgl. Houben-Weyl, Methoden der organischen Chemie, Bd. XIV/2, S. 88 (1963); High Polymers, Vol. XVI "Polyurethanes Chemistry and Technology, verfaßt von Saunders-Frisch, Interscince Publishers, New York/London, 1962/1964; Kunststoffhandbuch, Band VII, Vieweg-Höchtlen, Carl-Hanser-Verlag München, 1966).

Das erfindungsgemäße Verfahren eignet sich zur Herstellung der verschiedensten zelligen und porösen Materialien, insbesondere zur Herstellung von Schaumstoffen aus Kunststoffen. Die Kunststoffe können dabei durch Polymerisation, Polyaddition oder aber auch durch Polykondensation hergestellt werden. Als Kunststoffe seien beispielsweise genannt: Polyolefine, wie z.B. Polyäthylen oder Polypropylen, Polystyrol, Polyäthylstyrol, Polyamid, Polycarbonat, Polysulfon,

Le A 18 383

Polyäthylenterephthalat, Polybutylenterephthalat, Polyphenyllenoxid, Polymethacrylat, Polymethacrylnitril, Polyacrylnitril, Polyäthylen, Polyvinylchlorid, Kunststoff auf Basis von Celluloseestern, Mischpolymerisate aus den oben aufgeführten Komponenten, Acrylnitril-Butadien-Styrol-Polymere (ABS), Mischungen aus Polysulfon und Styrol-Acrylnitril oder ABS-Polymere, Mischungen aus Polycarbonat und ABS-Polymeren, Mischungen aus Polyvinylchlorid und ABS-Polymeren bzw. Styrol-Acrylnitril. Erfindungsgemäß können auch Schaumstoffe aus anorganisch-organischen Kunststoffen hergestellt werden, so wie z.B. in FR-PS 1 419 552, FR-PS 1 362 003, DT-OS 1 770 384, DT-OS 2 227 147, DT-OS 2 310 559, DT-OS 2 325 090, DT-OS 2 359 610, DT-OS 2 359 607, DT-OS 2 359 606, DT-OS 2 359 608, DT-OS 2 359 609 und DT-OS 2 359 612 beschrieben werden.

Das erfindungsgemäße Treibmittel wird vorzugsweise in Mengen von 0,01 bis 40, besonders bevorzugt von 0,1 bis 30 Gew.-%, bezogen auf den Kunststoff, bzw. bezogen auf das zum Kunststoff ausreagierende Reaktionsgemisch zugegeben. Es kann jedoch auch in jeder anderen dem Fachmann geläufigen Menge zudosiert werden. Die jeweilige Zugabe richtet sich im einzelnen nach den Erfordernissen, die der Fachmann an den zu schäumenden Gegenstand stellt.

Das erfindungsgemäße Treibmittel kann auch in Kombination mit bekannten Hilfsstoffen wie Nucleierungsmitteln bzw. Keimbildnern (z.B. Talkum, $MgCO_3$, $CaCO_3$, $ZnCO_3$, $CaSO_4$, $NaHCO_3$, Polytetrafluoräthylen-Pulver, Polyhexafluorpropylen-Pulver), Füllstoffe (z.B. Glasfasern, $CaCO_3$, $MgCO_3$, Kreide, Kaolin, $TiO_2$), Gleitmitteln (z.B. Wachse, Paraffine, Fettsäureester), Stabilisatoren (z.B. UV-Absorber, Licht- und Wärmestabilisatoren), Haftvermittlern (z.B. Paraffinöl, Weichmacher, Butylstearat, Harzlösungen), Trägerma-

Le A 18 383

terialien (z.B. SiO$_2$, MgO, ZnO, ZnCO$_3$), Peroxiden, Pigmenten, Farbstoffen, Antioxidanten und/oder Antiozonanten zum Einsatz gelangen.

Das erfindungsgemäße Verfahren eignet sich somit zur Herstellung von beliebigen Schaumstoffen, bei welchen bislang "physikalische Treibmittel" eingesetzt worden sind, d.h. bei welchen die Wirkung des Treibmittels auf ein Verdampfen einer leicht flüchtigen inerten Flüssigkeit zurückzuführen ist. Zu den bevorzugten Schaumstoffen welche nach dem erfindungsgemäßen Verfahren zugänglich sind, gehören die an sich bekannten Schaumstoffe auf Polyisocyanatbasis. Besonders bevorzugt sind hierbei die bekannten Polyurethan-Schaumstoffe. Zu den Schaumstoffen auf Polyisocyanat-Basis zählen neben den besonders bevorzugten Polyurethanschaumstoffen insbesondere Isocyanurat-Gruppen aufweisende Schaumstoffe, die durch an sich bekannte Trimerisierung von organischen Polyisocyanaten während der zum Schaumstoff führenden Reaktion erhalten werden, Carbodiimid-Gruppen aufweisende Schaumstoffe, wie sie in an sich bekannter Weise durch Kondensation von Isocyanatgruppen unter Carbodiimid-Bildung während der zum Schaumstoff führenden Reaktion erhalten werden, Mischtypen (Isocyanurat- und Carbodiimidgruppen sowie gegebenenfalls Urethangruppen aufweisend) wie sie durch Umsetzung von Polyisocyanaten mit unterschüssigen Mengen an Polyhydroxyverbindungen unter gleichzeitiger Mitverwendung von Trimerisierungskatalysatoren und/oder Carbodiimidisierungskatalysatoren erhalten werden, sowie organisch-anorganische Schaumstoffe wie sie z.B. durch Umsetzung von Polyisocyanaten mit Alkalisilikatlösungen und/

Le A 18 383

oder Dispersionen, gegebenenfalls unter Mitverwendung von Zusatzmitteln, nach den schon genannten Veröffentlichungen erhalten werden können.

Beim bevorzugten Verfahren zur Herstellung der geschäumten Kunststoffe auf Polyisocyanatbasis können als Ausgangsmaterialien beliebige aliphatische, cycloaliphatische, araliphatische, aromatische und heterocyclische, bei Raumtemperatur jedoch vorzugsweise flüssige Polyisocyanate eingesetzt werden, wie sie z.B. von W. Siefken in Justus Liebig's Annalen der Chemie, 562, Seiten 75-136, beschrieben werden, beispielsweise Äthylendiisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (deutsche Auslegeschrift 1 202 785, US-Patentschrift 3 401 190), 2,4- und 2,6-Hexahydrotoluylendiisocyanat sowie beliebige Gemische dieser Isomeren, Hexahydro-1,3- und/oder -1,4-phenylen-diisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat, Triphenylmethan-4,4',4"-triisocyanat, Polyphenyl-polymethylenpolyisocyanate, wie sie durch Anilin-Formaldehyd-Kondensation und anschließende Phosgenierung erhalten und z.B. in den britischen Patentschriften 874 430 und 848 671 beschrieben werden, m- und p-Isocyanatophenylsulfonyl-isocyanate

Le A 18 383

gemäß der US-Patentschrift 3 454 606, perchlorierte Arylpolyisocyanate, wie sie z.B. in der deutschen Auslegeschrift
1 157 601 (US-Patentschrift 3 277 138) beschrieben werden,
Carbodiimidgruppen aufweisende Polyisocyanate, wie sie in
der deutschen Patentschrift 1 092 007 (US-Patentschrift
3 152 162) beschrieben werden, Diisocyanate, wie sie in
der US-Patentschrift 3 492 330 beschrieben werden, Allophanatgruppen aufweisende Polyisocyanate, wie sie z.B. in
der britischen Patentschrift 994 890, der belgischen Patentschrift 761 626 und der veröffentlichten niederländischen
Patentanmeldung 7 102 524 beschrieben werden, Isocyanuratgruppen aufweisende Polyisocyanate, wie sie z.B. in der
US-Patentschrift 3 001 973, in den deutschen Patentschriften
1 022 789, 1 222 067 und 1 027 394 sowie in den deutschen
Offenlegungsschriften 1 929 034 und 2 004 048 beschrieben
werden, Urethangruppen aufweisende Polyisocyanate, wie sie
z.B. in der belgischen Patentschrift 752 261 oder in der
US-Patentschrift 3 394 164 beschrieben werden, acylierte
Harnstoffgruppen aufweisende Polyisocyanate gemäß der deutschen Patentschrift 1 230 778, Biuretgruppen aufweisende
Polyisocyanate, wie sie z.B. in der deutschen Patetschrift
1 101 394 (US-Patentschriften 3 124 605 und 3 201 372) sowie in der britischen Patentschrift 889 050 beschrieben
werden, durch Telomerisationsrekationen hergestellte Polyisocyanate, wie sie z.B. in der US-Patentschrift 3 654 106
beschrieben werden, Estergruppen aufweisende Polyisocyanate,
wie sie z.B. in den britischen Patentschriften 965 474 und
1 072 956, in der US-Patentschrift 3 567 763 und in der
deutschen Patentschrift 1 231 688 genannt werden, Umsetzungsprodukte der obengenannten Isocyanate mit Acetalen
gemäß der deutschen Patentschrift 1 072 385, polymere Fett-

Le A 18 383

säurereste enthaltende Polyisocyanate gemäß der US-Patentschrift 3 455 883.

Bevorzugt werden die üblicherweise bei der Herstellung von Schaumstoffen auf Polyisocyanat-Basis, insbesondere bei der Herstellung von Polyurethanschaumstoffen großtechnisch verwendeten, leicht zugänglichen Polyisocyanate eingesetzt. Beispiele hierfür sind 2,4-Diisocyanatotoluol, 2,6-Diisocyanatotoluol, aus diesen Isomeren bestehende Gemische, 4,4'-Diisocyanatodiphenylmethan, 2,4'-Diisocyanatodiphenylmethan, diese Isomeren sowie höhere Homologe dieser Diisocyanate enthaltende Polyisocyanatgemische der Diphenylmethanreihe, wie sie in an sich bekannter Weise durch Phosgenierung von Anilin/Formaldehyd-Kondensaten zugänglich sind, sowie Carbodiimid- und/oder Urethonimingruppen enthaltende Diphenylmethan-Diisocyanate, wie sie gemäß der deutschen Patentschrift 1 092 007 (US-Patentschrift 3 152 162) zugänglich sind, oder Urethangruppen aufweisende Polyisocyanate, wie sie durch Umsetzung von 1 Mol 4,4-Diisocyanatodiphenylmethan mit 0,05 bis 0,3 Mol an niedermolekularen Diolen oder Triolen, vorzugsweise Polypropylenglykolen eines unter 700 liegenden Molekulargewichts zugänglich sind. Mischungen der letztgenannten bevorzugten Polyisocyanate werden ebenfalls bevorzugt eingesetzt.

Erfindungsgemäß einzusetzende Ausgangskomponenten sind ferner gegebenenfalls Verbindungen mit mindestens zwei gegenüber Isocyanaten reaktionsfähigen Wasserstoffatomen von einem Molekulargewicht in der Regel von 62 bis 10 000. Hierunter versteht man neben Aminogruppen, Thiolgruppen oder Carboxylgruppen aufweisenden Verbindungen vorzugs-

Le A 18 383

weise Polyhydroxylverbindungen, insbesondere 2 bis 8 Hydroxylgruppen aufweisende Verbindungen, speziell solche vom Molekulargewicht 200 bis 10 000, vorzugsweise 1000 bis 6000, z.B. mindestens 2, in der Regel 2 bis 8, vorzugsweise aber 2 bis 4 Hydroxylgruppen aufweisende Polyester, Polyäther, Polythioäther, Polyacetale, Polyesteramide, wie sie für die Herstellung von homogenen und von zellförmigen Polyurethanen an sich bekannt sind. Die genannten höhermolekularen Polyhydroxylverbindungen werden beim erfindungsgemäßen Verfahren oft vorteilhaft im Gemisch mit bis zu 95, vorzugsweise bis zu 50 Gew.-%, bezogen auf Gesamtmenge an Polyhydroxylverbindungen an niedermolekularen Polyolen des Molekulargewichtsbereichs 62 bis 200 eingesetzt. Derartige niedermolekulare Polyole sind z.B. Äthylenglykol, 1,2-Propandiol, 1,3-Propandiol, 1,2-Butandiol, 1,4-Butandiol, 1,6-Hexandiol, 1,10-Decandiol, Diäthylenglykol, Triäthylenglykol, Tetraäthylenglykol, Dipropylenglykol, Tripropylenglykol, Glycerin, Trimethylolpropan und dergleichen.

Die in Frage kommenden Hydroxylgruppen aufweisenden Polyester sind z.B. Umsetzungsprodukte von mehrwertigen, vorzugsweise zweiwertigen und gegebenenfalls zusätzlich dreiwertigen Alkoholen mit mehrwertigen, vorzugsweise zweiwertigen Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome,

**Le A 18 383**

substituiert und/oder ungesättigt sein. Als Beispiele hierfür seien genannt:

Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere und trimere Fettsäuren wie Ölsäure, gegebenenfalls in Mischung mit monomeren Fettsäuren, Terephthalsäuredimethylester, Terephthalsäure-bis-glykolester. Als mehrwertige Alkohole kommen z.B. Äthylenglykol, Propylenglykol-(1,2) und -(1,3), Butylenglykol-(1,4) und -(2,3), Hexandiol-(1,6), Octandiol-(1,8), Neopentylglykol, Cyclohexandimethanol (1,4-Bishydroxymethylcyclohexan), 2-Methyl-1,3-propandiol, Glycerin, Trimethylolpropan, Hexantriol-(1,2,6), Butantriol-(1,2,4), Trimethyloläthan, Pentaerythrit, Chinit, Mannit und Sorbit, Methylglykosid, ferner Diäthylenglykol, Triäthylenglykol, Tetraäthylenglykol, Polyäthylenglykole, Dipropylenglykol, Polypropylenglykole, Dibutylenglykol und Polybutylenglykole in Frage. Die Polyester können anteilig endständige Carboxylgruppen aufweisen. Auch Polyester aus Lactonen, z.B. $\varepsilon$-Caprolacton oder Hydroxycarbonsäuren, z.B. $\omega$-Hydroxycapronsäure, sind einsetzbar.

Auch die erfindungsgemäß in Frage kommenden, mindestens 2, in der Regel 2 bis 8, vorzugsweise 2 bis 3, Hydroxylgruppen aufweisenden Polyäther sind solche der an sich bekannten Art und werden z.B. durch Polymerisation von Epoxiden, wie Äthylenoxid, Propylenoxid, Butylenoxid, Tetrahydrofuran, Styroloxid oder Epichlorhydrin mit sich selbst, z.B. in

Le A 18 383

Gegenwart von $BF_3$, oder durch Anlagerung dieser Epoxide, gegebenenfalls im Gemisch oder nacheinander, an Startkomponenten mit reaktionsfähigen Wasserstoffatomen, wie Alkohole oder Amine, z. B. Wasser, Äthylenglykol, Propylenglykol-(1,3) oder -(1,2), Trimethylolpropan, 4,4'-Dihydroxydiphenylpropan, Anilin, Ammoniak, Äthanolamin, Äthylendiamin hergestellt. Auch Sucrosepolyäther, wie sie z. B. in den deutschen Auslegeschriften 1 176 358 und 1 064 938 beschrieben werden, kommen erfindungsgemäß infrage. Vielfach sind solche Polyäther bevorzugt, die überwiegend (bis zu 9o Gewichtsprozent, bezogen auf alle vorhandenen OH-Gruppen im Polyäther) primäre OH-Gruppen aufweisen. Auch durch Vinylpolymerisate modifizierte Polyäther, wie sie z. B. durch Polymerisation von Styrol, Acrylnitril in Gegenwart von Polyäthern entstehen (US-Patentschriften 3 383 351, 3 3o4 273, 3 523 o93, 3 11o 695, deutsche Patentschrift 1 152 536), sind ebenfalls geeignet, ebenso OH-Gruppen aufweisende Polybutadiene.

Unter den Polythioäthern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten um Polythiomischäther, Polythioätherester, Polythioätheresteramide.

Als Polyacetale kommen z. B. die aus Glykolen, wie Diäthylenglykol, Triäthylenglykol, 4,4'-Dioxäthoxy-diphenyldimethylmethan, Hexandiol und Formaldehyd herstellbaren Verbindungen in Frage. Auch durch Polymerisation cyclischer Acetale lassen sich erfindungsgemäß geeignete Polyacetale herstellen.

Le A 18 383

Als Hydroxylgruppen aufweisende Polycarbonate kommen solche der an sich bekannten Art in Betracht, die z. B. durch Umsetzung von Diolen, wie Propandiol-(1,3), Butandiol-(1,4) und/oder Hexandiol-(1,6), Diäthylenglykol, Triäthylenglykol, Tetraäthylenglykol mit Diarylcarbonaten, z. B. Diphenylcarbonat oder Phosgen, hergestellt werden können.

Zu den Polyesteramiden und Polyamiden zählen z. B. die aus mehrwertigen gesättigten und ungesättigten Carbonsäuren bzw. deren Anhydriden und mehrwertigen gesättigten und ungesättigten Aminoalkoholen, Diaminen, Polyaminen und ihre Mischungen gewonnenen, vorwiegend linearen Kondensate.

Auch bereits Urethan- oder Harnstoffgruppen enthaltende Polyhydroxylverbindungen sowie gegebenenfalls modifizierte natürliche Polyole, wie Rizinusöl, Kohlenhydrate, Stärke, sind verwendbar. Auch Anlagerungsprodukte von Alkylenoxiden an Phenol-Formaldehyd-Harze oder auch an Harnstoff-Formaldehydharze sind erfindungsgemäß einsetzbar.

Vertreter dieser erfindungsgemäß zu verwendenden Verbindungen sind z. B. in High Polymers, Vol. XVI, "Polyurethanes, Chemistry and Technology", verfaßt von Saunders-Frisch, Interscience Publishers, New York, London, Band I, 1962, Seiten 32 - 42 und Seiten 44 - 54, und Band II, 1964, Seiten 5 - 6 und 198 - 199, sowie im Kunststoff-Handbuch, Band VII, Vieweg-Höchtlen, Carl-Hanser-Verlag, München, 1966, z. B. auf den Seiten 45 - 71 beschrieben.

<u>Le A 18 383</u>

Beim erfindungsgemäßen Verfahren kommen die Reaktionspartner vorzugsweise in Mengenverhältnissen zum Einsatz, welche einer NCO-Kennzahl von 70 bis 800, vorzugsweise 90 bis 130, entsprechen. (Die NCO-Kennzahl 100 bedeutet das Vorliegen von äquivalenten Mengen an Isocyanatgruppen und mit diesen Isocyanatgruppen in Reaktion tretenden aktiven Wasserstoffatomen im Reaktionsgemisch).

Erfindungsgemäß können gegebenenfalls weitere bevorzugt jedoch leicht flüchtige organische Substanzen als Treibmittel mitverwendet werden. Als organische Treibmittel kommen z.B. Aceton, Äthylacetat, in der Stratosphäre abbaubare Halogensubstituierte Alkane, wie Methylenchlorid, Chloroform, Äthyliden-chlorid, Vinylidenchlorid, ferner Butan, Hexan, Heptan oder Diäthyläter in Frage. Gemäß einer bevorzugten Ausführungsform des erfindungsgemäßen Verfahrens werden als Treibmittel azeotrope Gemische der erfindungswesentlichen Treibmittel mit anderen umweltfreundlichen Treibmitteln der beispielhaft genannten Art eingesetzt, um so den Siedepunkt des Treibmittels dem jeweiligen Einsatzzweck anzupassen.

Ferner kommen beim erfindungsgemäßen Verfahren oft zusätzliche die Isocyanat-Additionsreaktion beschleunigende Verbindungen zum Einsatz, z.B. organische Metallverbindungen, insbesondere organische Zinnverbindungen, wie z.B. Zinn-(II)-acetat, Zinn-(II)-octoat, Zinn-(II)-äthylhexoat und Zinn-(II)-laurat und die Dialkylzinnsalze von Carbonsäuren, wie z.B. Dibutylzinndiacetat, Dibutylzinn-dilaurat, Dibutylzinn-maleat oder Dioctylzinndiacetat.

Das erfindungsgemäße Verfahren kann unter Mitverwendung der

**Le A 18 383**

an sich bekannten, die Trimerisierung von Isocyanaten katalysierenden Verbindungen auch dahingehend abgewandelt werden, daß Isocyanuratgruppen aufweisende Polyurethanschaumstoffe entstehen. Insbesondere bei dieser Ausführungsform des erfindungsgemäßen Verfahrens wird mit NCO-Kennzahlen gearbeitet, welche wesentlich über 100 liegen, da hier freie Isocyanatgruppen nicht nur zur Reaktion mit den aktiven Wasserstoffatomen sondern auch zur Trimerisierung zur Verfügung stehen müssen. Als Trimerisierungskatalysatoren werden beliebige Verbindungen eingesetzt, die bereits bei Raumtemperatur eine Polymerisationsreaktion der NCO-Gruppe initiieren. Derartige Verbindungen sind beispielsweise in der französischen Patentschrift 1 441 565, den belgischen Patentschriften 723 153 und 723 152 oder in der deutschen Offenlegungsschrift 2 301 408 beschrieben. Es handelt sich insbesondere um basische Salze, wie z.B. Natriumacetat, Kaliumacetat oder ein- oder mehrkernige Mannich-Basen aus gegebenenfalls durch Alkyl-, Aryl- oder Aralkylreste substituierten kondensierbaren Phenolen, Oxoverbindungen und sekundären Aminen, speziell solche, bei denen als Oxoverbindung Formaldehyd und als sekundäres Amin Dimethylamin verwendet worden sind. Im allgemeinen entstehen in den Schaumstoffen laut IR-spektroskopischen Analysen, je nach Bedingungen, insbesondere in Abhängigkeit von der erreichten Reaktionstemperatur mehr oder minder hohe Anteile an Carbodiimid-Strukturen, deren Anteil in den Schaumstoffen durch Mitverwendung der zur Herstellung von Carbodiimiden bekannten Katalysatoren, besonders 3- bis 5-wertigen organischen Phosphorverbindungen, wie Phospholinen, Phospholinoxiden, tertiären Phosphinen und dergleichen, erhöht werden kann. Es ist auch möglich, beim erfin-

**Le A 18 383**

dungsgemäßen Verfahren ganz auf die Mitverwendung von Verbindungen mit gegenüber Isocyanatgruppen reaktionsfähigen Gruppen zu verzichten, um Isocyanuratgruppen und gegebenenfalls Carbodiimidgruppen, jedoch keine Urethangruppen aufweisende Schaumstoffe herzustellen. Auch für die Herstellung derartiger Schaumstoffe auf Polyisocyanat-Basis sind die erfindungswesentlichen Treibmittel hervorragend geeignet. Weitere Einzelheiten können z.B. "Polyurethanes, Chemistry and Technology", Bd. I und II, Saunders-Frisc-, Interscience Publishers, 1962 und 1964, entnommen werden.

Die Menge an Polymerisationskatalysator wird wesentlich durch die Art und gegebenenfalls die Basizität des Katalysators bestimmt, im allgemeinen werden, falls die gleichzeitige Isocyanuratbildung beim erfindungsgemäßen Verfahren erwünscht ist, 0,1 bis 10, vorzugsweise 0,2 bis 5 Gew.-% der Trimerisierungskatalysatoren, bezogen auf Polyisocyanatkomponente, eingesetzt.

Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z.B. auf den Seiten 96 bis 102 beschrieben.

Die die Polyurethanbildung beschleunigenden Katalysatoren werden in der Regel in einer Menge zwischen etwa 0,001 und 10 Gewichtsprozent, bezogen auf die Menge an Verbindungen mit mindestens zwei gegenüber Isocyanaten reaktionsfähigen Wasserstoffatomen von einem Molekulargewicht von 62 bis 10.000, eingesetzt.

Le A 18 383

Erfindungsgemäß können auch oberflächenaktive Zusatzstoffe (Emulgatoren und Schaumstabilisatoren) mitverwendet werden. Als Emulgatoren kommen z. B. die Natriumsalze von Ricinusölsulfonaten oder auch von Fettsäuren oder Salze von Fettsäuren mit Aminen, wie ölsaures Diäthylamin oder stearinsaures Diäthanolamin infrage. Auch Alkali- oder Ammoniumsalze von Sulfonsäuren, wie etwa von Dodecylbenzolsulfonsäure oder Dinaphthylmethandisulfonsäure oder auch von Fettsäuren, wie Ricinolsäure oder von polymeren Fettsäuren können als oberflächenaktive Zusatzstoffe mitverwendet werden.

Als Schaumstabilisatoren kommen vor allem wasserlösliche Polyäthersiloxane infrage. Diese Verbindungen sind im allgemeinen so aufgebaut, daß ein Copolymerisat aus Äthylenoxid und Propylenoxid mit einem Polydimethylsiloxanrest verbunden ist. Derartige Schaumstabilisatoren sind z. B. in der US-Patentschrift 2764565 beschrieben.

Erfindungsgemäß können ferner auch Reaktionsverzögerer, z. B. sauer reagierende Stoffe, wie Salzsäure oder organische Säurehalogenide, ferner Zellregler der an sich bekannten Art, wie Paraffine oder Fettalkohole oder Dimethylpolysiloxane sowie Pigmente oder Farbstoffe und Flammschutzmittel der an sich bekannten Art, z. B. Tris-chloräthylphosphat oder Ammoniumphosphat und -polyphosphat, ferner Stabilisatoren gegen Alterungs- und Witterungseinflüsse, Weichmacher und fungistatisch und bakteriostatisch wirkende Substanzen, Füllstoffe, wie Bariumsulfat, Kieselgur, Ruß oder Schlämmkreide mitverwendet werden.

Le A 18 383

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und
Höchtlen, Carl-Hanser-Verlag, München 1966, z. B. auf den
Seiten 1o3 bis 113 beschrieben.

Das erfindungsgemäße Verfahren kann sowohl zur Herstellung
von frei verschäumten Schaumstoffen als auch zur Herstellung
von Formschaumstoffen, insbesondere solchen mit geschlossener
Außenhaut, herangezogen werden. Bei dieser Herstellung von
Formschaumstoffen wird das Reaktionsgemisch in eine Form eingetragen. Als Formmaterial
kommt Metall, z.B. Aluminium oder Kunststoff, z.B. Epoxidharz, in Frage. In der Form schäumt das schäumfähige Reaktionsgemisch auf und bildet den Formkörper.
Die Formverschäumung kann dabei so durchgeführt werden, daß
das Formteil an seiner Oberfläche Zellstruktur aufweist, es
kann aber auch so durchgeführt werden, daß das Formteil eine
kompakte Haut und einen zelligen Kern aufweist. Erfindungsgemäß kann man in diesem Zusammenhang so vorgehen, daß man
in die Form so viel schäumfähiges Reaktionsgemisch einträgt,
daß der gebildete Schaumstoff die Form gerade ausfüllt. Man
kann aber auch so arbeiten, daß man mehr schäumfähiges
Reaktionsgemisch in die Form einträgt, als zur Ausfüllung
des Forminneren mit Schaumstoff notwendig ist. Im letztgenannten Fall wird somit unter "overcharching" gearbeitet;
eine derartige Verfahrensweise ist z. B. aus der US-Patentschrift 3 178 49o oder aus der US-Patentschrift 3 182 1o4

Le A 18 383

bekannt. Beim Arbeiten gemäß der letztgenannten Methode entstehen dann die Schaumstoffe mit geschlossener Außenhaut.

Erfindungsgemäß können auch kalthärtende Schaumstoffe hergestellt werden (vgl. britische Patentschrift 1 162 517, deutsche Offenlegungsschrift 2 153 086).

Beim erfindungsgemäßen Verfahren zur Herstellung von Formschaumstoffen mit kompakter Außenhaut können auch die an sich bekannten inneren Formtrennmittel des Standes der Technik, wie sie beispielsweise in den DT-OSS 1 953 637 bzw. 2 121 67o beschrieben sind, mitverwendet werden.

Bei der Durchführung des erfindungsgemäßen Verfahrens werden die Reaktionskomponenten vorzugsweise nach dem an sich bekannten Einstufen-Verfahren zur Umsetzung gebracht, wobei man sich oft maschineller Einrichtungen bedient, z. B. solcher, die in der US-PS 2 764 565 beschrieben werden. Einzelheiten über Verarbeitungseinrichtungen, die auch erfindungsgemäß infrage kommen, werden im Kunststoff-Handbuch, Band VII, herausgegeben von Vieweg und Höchtlen, Carl-Hanser-Verlag, München 1966, z. B. auf den Seiten 121 bis 2o5 beschrieben.

Die Verfahrensprodukte können in harter Einstellung zur Herstellung von Möbelteilen , Karosserieteilen von Fahrzeugen, technischen Geräten und Bauelementen Verwendung finden, sowie in halbharter bis weicher Einstellung zur Herstellung von Sicherheitspolsterungen im Automobilbau, elastischen Schuhsohlen, Stoßfängern usw.

Im folgenden sei das erfindungsgemäße Verfahren beispielhaft beschrieben.

**Le A 18 383**

Beispiel

Herstellung von Polyurethanhartschaumstoffen unter Verwendung von Monofluortrichlormethan (Treibmittel A), 1,1,1-Trifluor-2-chloräthan (Treibmittel B) und 1,1-Difluor-1,2-dichloräthan (Treibmittel C) als Treibmittel. Die Schaumstoffe wurden nach folgenden unterschiedlichen Rezepturen hergestellt:

Rezeptur I:

85  g eines durch Propoxylierung von Saccharose erhaltenen Polyätherpolyols (OH-Zahl 380, Viskosität bei 25°C 13 000 mPa.s);

15  g eines phosphorhaltigen, einbaufähigen Flammschutzmittels mit der OH-Zahl 450;

1,5g eines Siliconstabilisators auf Basis eines mit seitenständigen Polyäthergruppen modifizierten Polysiloxans;

0,5g Wasser;

2,0g Dimethylcyclohexylamin;

28,0g Treibmittel;

115  g technisches Polyisocyanatgemisch der Diphenylmethanreihe der Viskosität 200 mPa.s/20°C, hergestellt durch Phosgenierung von Anilin/CH$_2$O-Kondensaten.

Rezeptur II:

80  g eines durch Propoxylierung von Saccharose erhaltenen Polyätherpolyols (OH-Zahl 380, Viskosität bei 25°C 13 000 mPa.s);

12  g eines durch Propoxylierung von Trimethylolpropan

Le A 18 383

erhaltenen Polyätherpolyols (OH-Zahl 380, Viskosität bei 25°C 600 mPa.s);

8  g eines durch Äthoxylierung von Äthylamin erhaltenen Diols (OH-Zahl 490);

1,5g eines Siliconstabilisators auf Basis eines mit seitenständigen Polyäthergruppen modifizierten Polysiloxans;

2,0g Wasser;

1,3g Dimethylcyclohexylamin;

38  g Treibmittel;

130  g technisches Polyisocyanatgemisch wie in Rezeptur I.

Die Polyole wurden in einem Pappbecher mit den Zusatzmitteln und den Treibmitteln durch Rühren vermischt, die durch den Mischvorgang verflüchtigte Treibmittelmenge ergänzt,das Isocyanat zugegeben und die Mischung intensiv verrührt (alle Komponenten waren vor dem Vermischen auf 20°C temperiert worden). Im Falle des Treibmittels B wurde die Polyolzusatzmittelkomponente zunächst auf ca. 5°C abgekühlt und bei dieser Temperatur das Treibmittel eingerührt. Die Mischung wurde dann vorsichtig auf 20°C erwärmt. Das Reaktionsgemisch wurde sofort nach der Herstellung in eine Form aus Packpapier (Grundfläche 20 x 20 cm im Quadrat, Höhe 14 cm) gegossen. Während des Schäumvorganges wurde die Startzeit und die Abbindezeit gemessen.

Die Meßdaten für die verschiedenen Rezepturen bzw. verschiedenen Treibmittel sind in der folgenden Tabelle wiedergegeben.

**Le A 18 383**

<u>Tabelle</u>

| | Rezeptur I Treibmittel | | | Rezeptur II Treibmittel | | |
|---|---|---|---|---|---|---|
| | A | B | C | A | B | C |
| Startzeit $\angle s\overline{7}$ | 30 | 32 | 20 | 13 | 13 | 12 |
| Abbindezeit $\angle s\overline{7}$ | 130 | 136 | 87 | 102 | 123 | 95 |
| Rohdichte $\angle kg/m^3\overline{7}$ | 33 | 33 | 26 | 21 | 21,5 | 19 |
| Druckfestigkeit $\angle MPa\overline{7}$ | | | | - | - | - |
| in Schäumrichtung | 0,23 | 0,22 | 0,16 | - | - | - |
| senkrecht z. Schäumrichtg. | 0,12 | 0,11 | 0,10 | - | - | - |
| Dimensionsstabilität (% Vol-Änderg.) | | | | - | - | - |
| 3 h, -30°C | 0 | 0 | -2 | - | - | - |
| 5 h, +100°C | 0 | 0 | +4 | - | - | - |

<u>Le A 18 383</u>

0000917

Patentansprüche:

1. Verfahren zur Herstellung von geschäumten Kunststoffen durch Umsetzung von zu hochmolekularen Kunststoffen im Sinne einer Polymerisations-, Polykondensations- oder Polyadditionsreaktion ausreagierenden Ausgangsmaterialien in Gegenwart von Treibmitteln oder an sich bekanntes Verschäumen eines nichtgeschäumten, thermoplastischen Kunststoffs mit Hilfe eines Treibmittels, dadurch gekennzeichnet, daß man als Treibmittel 1,1,1-Trifluor-2-chloräthan, gegebenenfalls im Gemisch mit 1,1-Difluor-1,2-dichloräthan einsetzt.

2. Verfahren gemäß Anspruch 1, dadurch gekennzeichnet, daß man zu Polyurethanen ausreagierende Reaktionsgemische in Gegenwart der Treibmittel zu Polyurethanschaumstoffen umsetzt.

3. Verwendung von 1,1,1-Trifluor-2-chloräthan, gegebenenfalls im Gemisch mit 1,1-Difluor-1,2-dichloräthan, bei der Herstellung von geschäumten Kunststoffen.

4. Verwendung gemäß Anspruch 3 bei der Herstellung von Polyurethanschaumstoffen.

Le A 18 383

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | US - A - 3 983 080 (K.W. SUH ET AL.) <br> * Anspruch 1; Spalte 4, Zeile 8 * <br> --- | 1,3 |
| X | US - A - 3 062 729 (R.E. SKOCHDO-POLE et al.) <br> * Anspruch 1 * <br> --- | 1,3 |
| X | DE - A - 2 704 278 (DOW CHEMICAL) <br> * Ansprüche 1,4 * <br> --- | 1,3 |
| X | FR - A - 2 205 553 (S.N. DES POUDRES & EXPLOSIFS) <br> * Anspruch 1; Seite 2, Zeilen 11-23 * <br> --- | 1,3 |
| | US - A - 3 640 916 (D.W. DILL) <br> * Ansprüche 1,7 * <br> --- | 1,3 |
| | FR - A - 1 457 732 (ALLIED CHEMICAL) <br> * Zusammenfassung; Seite 4, Zeilen 10,11 * <br> --- | 1,3 |
| A | FR - A - 2 337 743 (DU PONT DE NEMOURS) <br> * Anspruch 1 * <br> --- <br> ./. | 2,4 |

**KLASSIFIKATION DER ANMELDUNG (Int.Cl.²)**

C 08 J 9/14//
C 08 L 75/04

**RECHERCHIERTE SACHGEBIETE (Int. Cl.²)**

C 08 J 9/14

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent-familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 27-11-1978 | HALLEMEESCH |

EPA form 1503.1  06.78

| | EINSCHLÄGIGE DOKUMENTE | | | KLASSIFIKATION DER ANMELDUNG (Int.Cl.²) |
|---|---|---|---|---|
| Kategorie | Kennzeichnung des Dokuments mit Angabe, soweit erforderlich, der maßgeblichen Teile | betrifft Anspruch | | |
| A | <u>GB - A - 876 977</u> (LOCKHEED)<br>* Anspruch 1; Seite 3, Zeile 1 * | 2,4 | | |
| | | | | **RECHERCHIERTE SACHGEBIETE (Int. Cl.²)** |

EPA Form 1503.2   06.78